(19) Europäisches Patentamt
European Patent Office
Office européen des brevets

(11) **EP 1 058 404 A2**

(12) **EUROPEAN PATENT APPLICATION**

(43) Date of publication:
06.12.2000 Bulletin 2000/49

(51) Int. Cl.⁷: **H04B 7/005**

(21) Application number: **00110554.3**

(22) Date of filing: **17.05.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **31.05.1999 JP 15237999**

(71) Applicant: **NEC CORPORATION**
**Tokyo (JP)**

(72) Inventor:
**Kyusai, Eiko,**
**NEC Mobile Communications**
**Yokohama-shi, Kanagawa (JP)**

(74) Representative: **Betten & Resch**
**Reichenbachstrasse 19**
**80469 München (DE)**

(54) **CDMA Base station and communication control method therefor**

(57)    A system can realize stable quality of communication by performing monitoring and control of a communication quality and to perform initiation of communication for new user when communication quality once degraded is recovered. A base station of a mobile communication employing a Code Division Multiple Access (CDMA) system as a radio access performs degradation monitoring of communication quality with a mobile station and determines whether communication of new mobile station is to be permitted or not, depending upon result of judgment.

FIG.1

**Description**

BACKGROUND OF THE INVENTION

Field of the Invention

The present invention relates generally to a mobile communication system. More particularly, the invention relates to monitoring and control of degradation of communication quality by interference of a base station of mobile communication.

Description of the Related Art

In a cellular phone system under Code Division Multiple Access (CDMA) system in an Interim Standard (IS)-95, since separation of signals of mobile stations communicating with a radio base station (hereinafter simply referred to as "base station") is performed by a spread code, signals of other channels serve as interference noise during reception. Therefore, interference noise level becomes higher according to increasing of other channels. As a result, a signal to noise (S/N) ratio or the like is lowered to cause shutting down of communication.
In order to reduce interference with other channels, a measure has been taken to perform an up transmission power control by precisely rising and lowering a transmission power from the mobile station to the base station and a down transmission power control by precisely rising and lowering a transmission power from the base station to the mobile station to perform transmission and reception at a power, at which communication quality can be guaranteed, and whereby to reduce interference.
On the other hand, as an antenna device for the base station which can reduce interference with other channel which is an important cause of degradation of the communication quality, Japanese Unexamined Patent Publication No. Heisei 10-200322 discloses a construction which has a function for forming a multi-beam for each sector.
However, since the transmission power control between the base station and the mobile station cannot perform control for providing sufficient stability in communication for presence of upper and lower limits in power control. Namely, when new user (mobile station) is added to a cell, in which communication quality is lowered, at the limit of the transmission power control, to start communication, the communication quality of such cell is further degraded to possibly cause breakage of call of the users in the cell.
As set forth above, when detection of degradation of communication quality is not performed, if new communication is initiated in the cell, in which communication quality is degraded, interference is inherently increased to cause further degradation of the communication quality to cause shutting down of the communication.

SUMMARY OF THE INVENTION

The present invention has been worked out in view of the shortcoming in the prior art set forth above. Therefore, it is an object of the present invention to provide a system which can realize stable quality of communication by performing monitoring and control of a communication quality and to perform initiation of communication for new user when communication quality once degraded is recovered.
According to the first aspect of the present invention, a base station of a mobile communication employing a Code Division Multiple Access (CDMA) system as a radio access, comprises:

degradation judgment means for performing degradation monitoring of communication quality with a mobile station; and
communication control means for determining whether communication of new mobile station is to be permitted or not, depending upon result of judgment by the degradation judgment means.

According to the second aspect of the present invention, communication control method of a base station of a mobile communication employing a Code Division Multiple Access (CDMA) system as a radio access, comprises:

a first step of performing degradation monitoring of communication quality with a mobile station; and
a second step of determining whether communication of new mobile station is to be permitted or not, depending upon result of judgment by the degradation judgment means.

BRIEF DESCRIPTION OF THE DRAWINGS

The present invention will be understood more fully from the detailed description given hereinafter with reference to the accompanying drawings of the preferred embodiment of the present invention, which, however, should not be taken to be limitative to the present invention, but are for explanation and understanding only.

In the drawings:

Fig. 1 is a block diagram showing a construction of one embodiment of a system according to the present invention;
Figs. 2A to 2D are charts showing sequence in one embodiment of the invention; and
Fig. 3 is an illustration showing a state transition between a good quality condition and degraded condition of communication quality in one embodiment of the invention.

DESCRIPTION OF THE PREFERRED EMBODIMENT

The present invention will be discussed hereinafter in detail in terms of the preferred embodiment of the present invention with reference to the accompanying drawings. In the following description, numerous specific details are set forth in order to provide a thorough understanding of the present invention. It will be obvious, however, to those skilled in the art that the present invention may be practiced without these specific details. In other instance, well-known structure are not shown in detail in order to avoid unnecessary obscurity of the present invention.

In shown embodiment of the present invention, a mobile communication radio base station employing a CDMA system as a radio access includes transmission and reception means for performing transmission and reception of data with a mobile station, signal processing means for performing conversion of data format between a wired circuit for communication with a base station control unit and a radio circuit for communication with the radio station, and degradation judging means for performing monitoring of degradation of the communication quality with the mobile station. Upon reception of a communication start message from the mobile station, the degradation judging means derives a frame error ratio from a received frame to perform monitoring of degradation of the communication quality for discriminate good quality state and degraded state of communication. When the communication quality is in degraded state or is transited from good quality state to degraded state, new communication in a cell is not permitted. On the other hand, when the communication quality is in good quality state or the communication quality is transited from the degraded state to good quality state, new communication in the call is permitted.

As set forth above, when the communication quality is monitored and the degraded state is detected, the communication quality of the user currently in communication can be maintained by not permitting communication for new user. On the other hand, when the communication quality once degraded is recovered to good quality state as elapsing of time, initiation of communication is permitted for new user. In the manner set forth above, constantly stable communication quality can be provided.

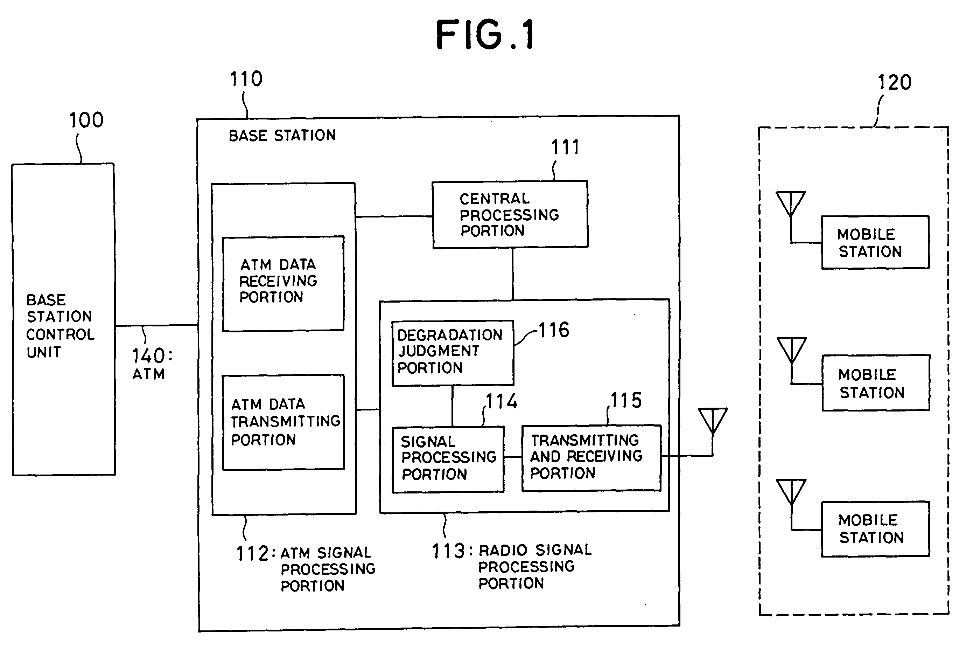

One embodiment of the present invention will be discussed with reference to the drawings. Fig. 1 is a block diagram showing a construction of one embodiment of the present invention. Referring to Fig. 1, a base station 110 includes a base station control unit 100, an ATM signal processing portion 112 processing an ATM frame, a radio signal processing portion 113 performing data communication with a plurality of mobile stations 120 through a radio circuit, and a central processing portion 111 controlling these components.

Also, the radio signal processing portion 113 has a transmitting and receiving portion 115 performing data communication with the mobile station, a signal processing portion 114 perform conversion of data format between that for wired circuit and that for the radio circuit, and a degradation judgment portion 116 performing monitoring of degradation of communication quality in communication with the mobile station.

A communication starting sequence under IS-95 is performed by an "Origination (calling) message" and a "Page Response message" from the mobile station newly initiating communication, or a "Pilot Strength Measurement message" from the mobile station 120 demanding softer hand-off.

The message passes through the base station 110 and is parsed by the base station control unit 100. The base station control unit 100 performs demanding of initiation of communication to the base station 110. If the result is normal termination, the initiation of communication is designated by "Channel Assignment message" to the mobile station 120.

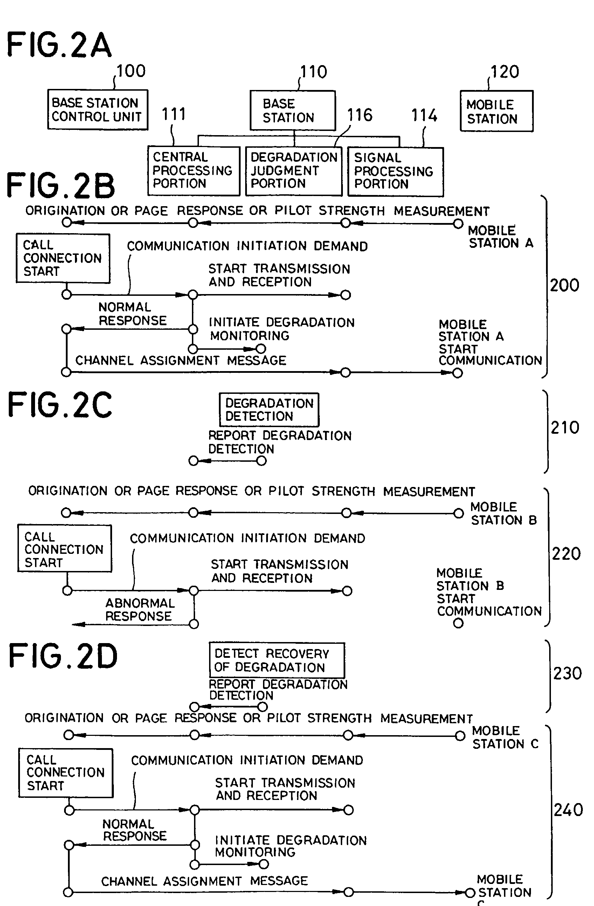

By normal termination of a sequence shown in Figs. 2B and 2D, communication between the mobile station and the base station is initiated.

For example, referring to a sequence 200 of Fig. 2B, the message from the mobile station A initiating new communication is past through the base station 110 and is parsed by the base station control unit 100. The base station control unit 100 initiates call connection process to perform a communication initiation demand for the base station 110. The central processing portion 111 of the base station 110 is responsive to the communication initiation demand to command starting of transmission and reception to the signal processing portion 114, and in conjunction therewith, to command starting of degradation monitoring for the degradation judgment portion 116. As a result, if the communication quality is good quality state, the degradation judgment portion 116 transmits a normal response to the base station control unit 100. In response to this, the base station control unit 100 transmits "Channel Assignment message" via the base station 110.

Thus, in initiation of communication, the central processing portion 111 of the base station demands initiation of monitoring of degradation of communication quality to the degradation judgment portion 116.

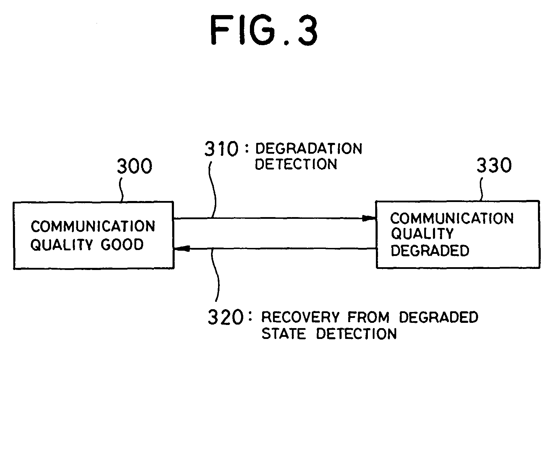

Fig. 3 is a state transition chart showing state transition between degradation/recovery from degradation of the communication quality.

The degradation judgment of communication quality is performed by monitoring a frame error rate (FER)derived from a result of cyclic redundancy check code (CRC) of the reception signal parsed by the signal processing portion 114 per communication. FER is a ratio of error frames among received frames during a given period, and is derived by:

$$FER = \{(\text{number of frames having abnormal CRC value})/ (\text{number of received frames}) \} \times 100$$

When the FER is in excess of a preliminarily derived threshold value p%, judgment is made that communication quality is degraded, and if the FER is reduced to be less than the threshold value p%, judgment is made that the communication quality is recovered.

Communication is constantly initiated at the good quality state 300 of communication quality. At this condition, if FER exceeds p% sequentially for n times, degradation state 310 is judged as degraded state 330 of communication quality.

On the other hand, in the degraded state 330 of the communication quality, when the FER becomes less than p% sequentially for m times, recovery 320 from degradation is detected to transit to good quality state 300 of the communication quality.

The degradation judgment portion 116 detecting degradation of communication or recovery from degradation is reported the detected state to the central processing portion 111 as shown by a sequence 210 or a sequence 230 of Fig. 2.

The central processing portion 111 receiving the result of detection of the degraded condition from the degradation judgment portion 116 controls so as not to permit new communication to the cell, subsequently.

Fig. 2C shows an operation sequence after reporting detection of degradation to the central processing unit 111 in the sequence 210. Here, the central processing portion 111 returns abnormal response for current degradation of the communication quality of own cell in response to demand for initiation of communication from the base station control unit 100. Namely, referring to Fig. 2C, the message from the mobile station B which newly initiate communication, is passed through the base station 110 and is parsed in the base station control unit 100. The base station control unit 100 initiates call connection process and performs demand for initiation of communication for the base station 110. The central processing portion 111 of the base station 110 is responsive to the communication initiation demand to command initiation of transmission and reception for the signal processing portion 114 and to transmit abnormal response to the vase station control unit 100 as degradation state of communication quality. In this case, the base station control unit 100 does not transmit "Channel Assignment message" for the mobile station B. Therefore, the mobile station B is not permitted communication (channel is not assigned).

On the other hand, a sequence 240 of Fig. 2D shows operation sequence upon detection of recovery from the degradation. Here, the central processing portion 111 of the base station 110 is responsive to the communication initiation demand from the base station control unit 100 to return a normal response since the communication quality of own cell is recovered to the good quality state to start communication with the new mobile station. Referring to Fig. 2D, the message from the mobile station C which newly initiate communication, is past through the base station 110 and is parsed by the base station control unit 100. The base station control unit 100 initiates call connection process and demand initiation of communication to the base station 110. The central processing portion 111 of the base station 110 is responsive to the communication initiation demand commands initiation of transmission and reception for the signal processing portion 114. In conjunction therewith, initiation of monitoring of degradation of the communication quality is transmitted to the degradation judgment portion 116. Since the result of judgment of communication quality in the degradation judgment portion 116 is good quality state, normal response is transmitted to the base station control unit 100. The base station control unit 100 is responsive to the normal response to transmit "Channel Assignment message" to the mobile station C through the base station 110.

As set forth above, according to the present invention, communication quality is monitored. When the communication quality is in degraded state, initiation of communication is not permitted so as not to introduce new interference which can be a cause of degradation of communication quality. By this, satisfactory communication quality can be stably provided for the mobile stations currently in communication.

Although the present invention has been illustrated and described with respect to exemplary embodiments thereof, it should be understood by those skilled in the art that the foregoing and various changes, emission and additions may be made therein and thereto, without departing from the spirit and scope of the present invention. Therefore, the present invention should not be understood as limited to the specific embodiment set out above but to include all possible embodiments which can be embodied within a scope encompassed and equivalent thereof with respect to the feature set out in the appended claims.

**Claims**

1. A base station of a mobile communication employing a Code Division Multiple Access (CDMA) system as a radio access, comprising:

   degradation judgment means for performing degradation monitoring of communication quality with a mobile station; and
   communication control means for determining whether communication of new mobile station is to be permitted or not, depending upon result of judgment by said degradation judgment means.

2. A CDMA base station as set forth in claim 1, wherein said communication control means does not permit communication of the new mobile station when a degraded condition of the communication quality or a communication quality being degraded

   from a good quality condition to a degraded condition is judged by said degradation judgment means.

3. A CDMA base station as set forth in claim 1, wherein said communication control means permits communication of the new mobile station when a good quality condition of the communication quality or a communication quality being recovered from a degraded condition to a good quality condition is judged by said degradation judgment means.

4. A CDMA base station as set forth in one of claims 1 to 3, wherein said degradation judgment means makes judgment as degraded condition of the communication quality when a frame error ratio exceeding a predetermined threshold value appears sequentially for a predetermined time.

5. A CDMA base station as set forth in one of claims 1 to 3, wherein said degradation judgment means makes judgment as good quality condition of the communication quality when a frame error ratio less than a predetermined threshold value appears sequentially for a predetermined time.

6. A CDMA base station as set forth in one of claims 1 to 5, wherein said degradation judgment means performs degradation judgment by monitoring a frame error ratio derived by a result of cycle redundancy check code (CRC).

7. A CDMA base station as set forth in one of claims 1 to 6, which further comprises:

   transmitting and receiving means for performing transmission and reception of data with said mobile station; and
   signal processing means for performing conversion of data between a circuit for communication with the base station control unit and a circuit for communication with said mobile station.

8. A communication control method of a base station of a mobile communication employing a Code Division Multiple Access (CDMA) system as a radio access, comprising:

   a first step of performing degradation monitoring of communication quality with a mobile station; and
   a second step of determining whether communication of a new mobile station is to be permitted or not, depending upon the result of judgment by said degradation judgment means.

9. A communication control method as set forth in claim 8, wherein said second step does not permit communication of the new mobile station when a degraded condition of the communication quality or a communication quality being degraded from a good quality condition to a degraded condition is judged by said first step.

10. A communication control method as set forth in claim 8, wherein said second step permits communication of the new mobile station when a good quality condition of the communication quality or a communication quality being recovered from a degraded condition to a good quality condition is judged by said first step.

11. A communication control method as set forth in claim 8, 9 or 10, wherein said first step makes judgment as degraded condition of the communication quality when a frame error ratio exceeding a predetermined threshold value appears sequentially for a predetermined time.

12. A communication control method as set forth in claim 8, 9 or 10 wherein said first step makes judgment as good quality condition of the communication quality when a frame error ratio is less than a predetermined threshold value appears sequentially for a predetermined time.

13. A communication control method as set forth in claim 8, 9, 10 or 11 wherein said first step performs degradation judgment by monitoring a frame error ratio derived by a result of cycle redundancy check code (CRC).

14. A communication control method as set forth in claim 8, 9, 10, 11 or 12 wherein said first step is initiated upon reception of the message upon initiation of communication from said mobile station.

# FIG.1

BASE STATION CONTROL UNIT (100)

140: ATM

BASE STATION (110)

ATM SIGNAL PROCESSING PORTION (112:)
- ATM DATA RECEIVING PORTION
- ATM DATA TRANSMITTING PORTION

CENTRAL PROCESSING PORTION (111)

RADIO SIGNAL PROCESSING PORTION (113:)
- DEGRADATION JUDGMENT PORTION (116)
- SIGNAL PROCESSING PORTION (114)
- TRANSMITTING AND RECEIVING PORTION (115)

(120)
- MOBILE STATION
- MOBILE STATION
- MOBILE STATION

EP 1 058 404 A2

# FIG.2A

100
BASE STATION
CONTROL UNIT

111

110
BASE
STATION

116        114

120
MOBILE
STATION

CENTRAL
PROCESSING
PORTION

DEGRADATION
JUDGMENT
PORTION

SIGNAL
PROCESSING
PORTION

# FIG.2B

ORIGINATION OR PAGE  RESPONSE OR PILOT STRENGTH  MEASUREMENT

MOBILE
STATION A

CALL
CONNECTION
START

COMMUNICATION INITIATION DEMAND

START TRANSMISSION
AND RECEPTION

NORMAL
RESPONSE

INITIATE DEGRADATION
MONITORING

MOBILE
STATION A
START
COMMUNICATION

CHANNEL ASSIGNMENT MESSAGE

200

# FIG.2C

DEGRADATION
DETECTION

REPORT DEGRADATION
DETECTION

210

ORIGINATION OR PAGE RESPONSE OR PILOT STRENGTH MEASUREMENT

MOBILE
STATION B

CALL
CONNECTION
START

COMMUNICATION INITIATION DEMAND

START TRANSMISSION
AND RECEPTION

ABNORMAL
RESPONSE

MOBILE
STATION B
START
COMMUNICATION

220

# FIG.2D

DETECT RECOVERY
OF DEGRADATION

REPORT DEGRADATION
DETECTION

230

ORIGINATION OR PAGE  RESPONSE OR PILOT STRENGTH  MEASUREMENT

MOBILE
STATION C

CALL
CONNECTION
START

COMMUNICATION INITIATION DEMAND

START TRANSMISSION
AND RECEPTION

NORMAL
RESPONSE

INITIATE DEGRADATION
MONITORING

CHANNEL ASSIGNMENT MESSAGE

MOBILE
STATION
C

240

# FIG.3

300

COMMUNICATION
QUALITY GOOD

310 : DEGRADATION
DETECTION

330

COMMUNICATION
QUALITY
DEGRADED

320 : RECOVERY FROM DEGRADED
STATE DETECTION